# EUROPÄISCHE PATENTSCHRIFT

(11) **EP 2 763 790 B1**
(45) Veröffentlichungstag und Bekanntmachung des Hinweises auf die Patenterteilung: **20.09.2017**
(21) Anmeldenummer: 12775618.7
(22) Anmeldetag: 02.10.2012
(51) Int. Cl.: B01J 20/24, B01J 41/16, B01J 20/28, B01J 20/32, C02F 1/28, C02F 1/42, C02F 1/58, C02F 101/14, C02F 101/36, C08B 3/10, C08B 3/14, C08H 8/00, C08B 15/06, C08L 1/08

(54) **VERWENDUNG EINES PORÖSEN ADSORBENS ZUR ABTRENNUNG FLUORIERTER ORGANISCHER VERBINDUNGEN AUS KONTAMINIERTEN FLUIDEN**
USE OF A POROUS ADSORBENT FOR REMOVING FLUORINATED ORGANIC COMPOUNDS FROM CONTAMINATED FLUIDS
UTILISATION D'UN ADSORBANT POREUX POUR SÉPARER DES COMPOSÉS ORGANIQUES FLUORÉS DE FLUIDES CONTAMINÉS

(30) Priorität: 06.10.2011 DE 102011114952
(43) Veröffentlichungstag der Anmeldung: 13.08.2014
(73) Patentinhaber: Fraunhofer-Gesellschaft zur Förderung der angewandten Forschung e.V., 80686 München (DE)
(72) Erfinder: BRUZZANO, Stefano, 47051 Duisburg (DE); SOMBORN-SCHULZ, Annette, 45661 Recklinghausen (DE); MÖHLE, Edda, 45219 Essen (DE); FASTABEND, Anna, 47057 Duisburg (DE)
(86) Internationale Anmeldenummer: PCT/EP2012/004140
(87) Internationale Veröffentlichungsnummer: WO 2013/050139

(56) Entgegenhaltungen:
- US-A- 4 605 640
- MARI GRANSTRÖM ET AL: "Highly water repellent aerogels based on cellulose stearoyl esters", POLYMER CHEMISTRY, Bd. 2, Nr. 8, 3. Mai 2011 (2011-05-03), Seiten 1789-1796, XP055052435, ISSN: 1759-9954, DOI: 10.1039/c0py00309c
- S. THIEBAUD ET AL: "Properties of wood esterified by fatty-acid chlorides", BIORESOURCE TECHNOLOGY, Bd. 59, Nr. 2-3, 1. Februar 1997 (1997-02-01), Seiten 103-107, XP055052578, ISSN: 0960-8524, DOI: 10.1016/S0960-8524(96)00160-5
- WILLIAM H DALY ET AL: "Influence of quaternary ammonium salts on cellulose benzylation", JOURNAL OF POLYMER SCIENCE: POLYMER LETTERS EDITION, Bd. 17, Nr. 2, 1. Februar 1979 (1979-02-01), Seiten 55-63, XP055052665, ISSN: 0360-6384, DOI: 10.1002/pol.1979.130170202
- YU Q ET AL: "Selective removal of perfluorooctane sulfonate from aqueous solution using chitosan-based molecularly imprinted polymer adsorbents", WATER RESEARCH, ELSEVIER, AMSTERDAM, NL, Bd. 42, Nr. 12, 1. Juni 2008 (2008-06-01), Seiten 3089-3097, XP022709905, ISSN: 0043-1354, DOI: 10.1016/J.WATRES.2008.02.024 [gefunden am 2008-03-05]

## Beschreibung

Die Anmeldung betrifft ein poröses Adsorbens, das insbesondere zur Abtrennung fluorierter organischer Verbindungen aus Fluiden geeignet ist. Dieses poröse Adsorbens ist erhältlich durch chemische Modifikation von Kohlenhydrat-haltigen Ausgangsmaterialien. Die Erfindung betrifft die Verwendung eines derartigen porösen Adsorbens zur Abtrennung von fluorierten organischen Verbindungen aus damit kontaminierten Fluiden. Fluorierte organische Verbindungen besitzen ausgezeichnete und einzigartige technologische Eigenschaften, weshalb sie seit langem in vielen unterschiedlichen industriellen Produkten und Prozessen Verwendung finden (z.B. als Textil- und Papierausrüstungen, als wasser- und schmutzabweisende Beschichtungen, als Hydraulikflüssigkeiten, als Feuerlöschschäume, in der Teflonherstellung sowie in der Galvanik). Aufgrund ihrer spezifischen Eigenschaften sind diese Substanzen für viele Anwendungen oft alternativlos. Allerdings weisen fluorierte Verbindungen, insbesondere perfluorierte Tenside, ein ökotoxisches sowie ein humantoxisches Potential auf, das u.a. auf der hohen Tendenz zur Bioakkumulation beruht. Aufgrund ihrer hohen Persistenz sind perfluorierte Tenside seit einigen Jahren ubiquitär in der Umwelt nachweisbar. Sie gelangen im Wesentlichen durch Abwässer aus fluorochemischen Produktionsverfahren oder durch die Nutzung und Entsorgung der entsprechenden Produkte in die Umwelt. Beispielsweise sind hier perfluorierte Tenside als Schaumbildner in Feuerlöschschäumen sowie Netz- und Antischleiermittel in Betrieben der Galvanik, Fototechnik oder Halbleitertechnik zu nennen.

In den chemikalienrechtlichen Vorschriften und Richtlinien vieler Länder, z.B. der europäischen Richtlinie 2006/122/EG wurde auf die Gefahren von Perfluoroctansäure und Perfluoralkylsulfonsäuren aufmerksam gemacht und deren Verwendung stark eingeschränkt.

In einer Reihe von Industriebetrieben sind perfluorierte Tenside allerdings unverzichtbar, insbesondere in der Galvanik, im Brandschutz sowie in der Foto- und Halbleitertechnik; daher wurden Ausnahmetatbestände für diese Anwendungszwecke in den jüngsten gesetzlichen Regelungen aufgenommen. Beispielsweise werden diese Stoffe in der Galvanotechnik im Arbeitsschutz eingesetzt (Antischleier- und Netzmittel); zur Immobilisierung der sehr giftigen und krebserzeugenden Chromsäure werden sie als Schaumsperre bzw. Sprühnebelverhinderer verwendet.

Um einen Eintrag von fluorierten organischen Verbindungen, insbesondere hochtoxischen Verbindungen wie speziellen perfluorierten Tensiden in Abwasser und Grundwasser zu reduzieren, werden heute verschiedene Maßnahmen in den Betrieben umgesetzt. Insbesondere ist hierbei die Abtrennung und getrennte Entsorgung der mit diesen Stoffen belasteten Abwasserteilströme zu nennen. Von entscheidender Bedeutung ist hierfür der Einsatz unterschiedlicher Behandlungsverfahren der Abwasser- und Grundwasserreinigung.

Bei der Reinigung besteht allerdings das Problem, dass insbesondere perfluorierte Tenside aufgrund ihrer chemisch-physikalischen Eigenschaften weder mit gängigen biologischen Verfahren noch durch klassische physikalische Methoden wie Strippen aus kontaminierten Fluiden wirksam abgetrennt werden können.

Die US 2007/0138110 A1 beschreibt beispielsweise die Entfernung perfluorierter Tenside mittels kapazitiver Deionisation kontaminierter Wässer. Dieses Verfahren ist allerdings für die Reinigung großer Abwassermengen bezüglich Anschaffung, Betrieb und Wartung der Anlagen zu kostenintensiv. Gleichermaßen gilt dies auch für nassoxidative Methoden, z.B. mittels UV-, Ozon-, Peroxiden- oder Mikrowellenstrahlung.

Bei einigen physikalischen Abtrennverfahren wie der Membrantechnik liegen nach der Behandlung hochkonzentrierte wässrige Lösungen als Abfälle vor, deren (thermische) Entsorgung schwierig und somit unwirtschaftlich ist.

Unter den chemischen Abtrennverfahren sind insbesondere Adsorptionsmethoden zu nennen. Zur Reinigung von Abwässern wird vielfach die Adsorption an Aktivkohle eingesetzt. Allerdings können amphiphile Substanzen, im Besonderen kurzkettige perfluorierte Tenside hiermit nicht selektiv und nur in geringem Umfang abgetrennt werden. Ferner ist Aktivkohle nur wenig effizient thermisch regenerierbar; auch für die Abgasreinigung sind aufwändige Techniken nötig. Demzufolge ist die Verwendung von Aktivkohle für die Abtrennung von perfluorierten Tensiden wirtschaftlich nachteilig.

Als Alternative zur Aktivkohle werden Adsorberharze eingesetzt. Sie zeigen ein wesentlich selektiveres Adsorptionsvermögen und eine größere Adsorptionskapazität im Bereich hoher Schadstoffkonzentrationen. Beispielsweise offenbart die WO 2008/066748 A1 die Verwendung von Ionenaustauschermaterialien. Trotzdem konnten sich Adsorberharze als Adsorptive zur Aufbereitung von Abwässern und Grundwässern nicht durchsetzen. Im Vergleich zur Aktivkohle sind diese im Anschaffungspreis höher und in der Regenerierung aufwändiger.

Es besteht also ein Bedarf, Adsorbermaterialien bereitzustellen, insbesondere für perfluorierte Tenside aber auch generell für fluorierte organische Verbindungen, die kostengünstiger sind als die gemäß dem Stand der Technik und die gegebenenfalls auch in Kombination mit Aktivkohle effizienzsteigernd genutzt werden können.

Für die Abtrennung von Schwermetallen aus kontaminierten Wässern wird eine Palette unterschiedlichster Materalien eingesetzt. Beispielsweise offenbart die WO 98/48933 A1 Adsorbenzien auf Basis modifizierter gemahlener Getreidekörner zur Abtrennung von Schwermetallen. Eine Eignung zur Abtrennung fluorierter organischer Verbindungen wird aber nicht offenbart.

Yu et al. (Water Research 42 (2008) Seiten 3089-3097) berichten von der selektiven Entfernung von Perfluorooktan-Sulfonat aus wässriger Lösung mittels eines chitosan-basierten "molecular-imprinted-polymer (MIP)" Sorbens, welches aus mittels Epichlorhydrin bzw. Glutaraldehyd vernetztem Chitosan besteht. Es ist somit eine Aufgabe der vorliegenden Erfindung, die Nachteile des Stands der Technik zu überwinden und ein Adsorptionsmittel und ein Verfahren zu dessen Herstellung anzugeben, das die Nachteile des Stands der Technik überwindet. Eine weitere Aufgabe der vorliegenden Erfindung ist es, Adsorbermaterialien für Fluor-haltige organische Verbindungen auf Basis von bio-basierten Ausgangsmaterialien und/oder Abfallstoffe anzugeben.

Diese Aufgaben werden durch den Gegenstand des unabhängigen Anspruchs gelöst.

Weitere Ausgestaltungen und Weiterbildungen sind Gegenstand von Unteransprüchen und gehen weiterhin auch aus der nachfolgenden Beschreibung hervor. Poröse Adsorbenzien zur Abtrennung fluorierter organischer Verbindungen aus Fluiden, die derartige fluorierte organische Verbindungen enthalten, insbesondere zur Abtrennung perfluorierter organischer Verbindungen und/oder fluorierter Tenside aus hiermit kontaminierten Fluiden, basieren auf einem Kohlenhydratenthaltenden Ausgangsmaterial bzw. einem Ausgangsmaterial, das aus einem Kohlenhydrat besteht, wobei dieses Ausgangsmaterial in chemisch-modifizierter Form vorliegt. Ein Charakterisierungsparameter für die Porosität dieser Adsorbenzien ist die spezifische Oberfläche, die mittels der BET-Methode angegeben werden kann und zumindest 10¹ m²/g, insbesondere 10¹ bis 10³ m²/g, beträgt. Um das Ausgangsmaterial chemisch zu modifizieren, kann das Kohlenhydrat-haltige bzw. aus Kohlenhydrat bestehende Ausgangsmaterial erfindungsgemäß mit einem Modifizierungsreagenz so behandelt werden, dass entweder eine hydrophobe Gruppe oder sowohl eine hydrophobe Gruppe als auch eine ionische, vorzugsweise kationische, Gruppe am Ausgangsmaterial chemisch gebunden wird. Letzteres erfolgt üblicherweise mit ein und demselben Modifizierungsreagenz (der Substituent enthält dann eine hydrophobe und eine kationische Gruppe oder besteht aus diesen Gruppen), grundsätzlich ist aber auch denkbar, zwei unterschiedliche Modifizierungsreagenzien einzusetzen. Das Modifizierungsreagenz ist also so ausgewählt, dass das Kohlenhydrat zumindest teilweise mit einem Substituenten substituiert wird, der eine hydrophobe Gruppe oder eine hydrophobe Gruppe und eine kationische Gruppe enthält oder aus diesen Gruppen besteht. Unter einer hydrophoben Gruppe wird hierbei verstanden, dass als Substituenten zumindest eine der folgenden Gruppen eingeführt wird: eine Alkyl-Gruppe, die zumindest eine Octyleneinheit (also eine Einheit der Formel -C₈H₁₆-, d.h. eine Octyleinheit oder eine nicht terminale Alkylgruppe beispielsweise eine mit der ionischen Gruppe substituierte Octylengruppe) umfasst, eine Aryl-Gruppe oder eine Aralkyl-Gruppe.

Grundsätzlich bestehen zwei unterschiedliche Möglichkeiten, ein derartiges poröses Adsorbens herzustellen. Entweder wird bereits als Ausgangsmaterial ein poröses Material eingesetzt, das dann chemisch modifiziert wird (erste Alternative). Prinzipiell ist es aber auch möglich, zunächst ein beliebiges nicht poröses Kohlenhydrat mit dem Modifizierungsreagenz zu behandeln, so dass der vorgenannte Substituent eingeführt wird und anschließend das so modifizierte Kohlenhydrat mit einer weiteren chemischen Reaktion an die Oberfläche eines porösen Stoffes chemisch anzubinden (zweite Alternative). Bei der ersten Alternative wird es üblicherweise so sein, dass ein wasserunlösliches Ausgangsmaterial modifiziert wird; durch die Wasserunlöslichkeit ist im Regelfall die Eignung als poröses Adsorbens gegeben (wenn man davon absieht, dass das kontaminierte Fluid auch ein organisches Lösungsmittel oder ein Gas sein kann, bei denen Wasserlöslichkeit eine untergeordnete oder gar keine Rolle spielt). Bei der zweiten Alternative kann durchaus ein wasserlösliches zu modifizierendes Kohlenhydrat eingesetzt werden, beispielsweise ein Zucker; erst durch die chemische Bindung des modifizierten Kohlenhydrats an einen porösen Stoff wird hier die Wasserunlöslichkeit realisiert (wobei auch hier die Wasserunlöslichkeit keine strikte Vorgabe ist; für organische Lösungsmittel und gasförmige Fluide sind durchaus auch wasserlösliche poröse Stoffe zur Herstellung des porösen Adsorbens geeignet). Die "weitere chemische Reaktion" zur Anbindung an die Oberfläche des porösen Stoffes ist dem Fachmann bekannt. Es handelt sich um eine herkömmliche Reaktion, die beispielsweise im Fall eines modifizierten Zuckers aus der Zuckerchemie bekannt ist, etwa eine nucleophile Substitution oder eine Kondensationsreaktionen der OH-Gruppen des Zuckers.

Mit den porösen Adsorbenzien werden nun Materialien zur Verfügung gestellt, mit denen kostengünstig fluorierte organische Verbindungen, insbesondere perfluorierte Tenside, aus kontaminierten Fluiden abgetrennt werden können. Erfindungsgemäß wurde festgestellt, dass durch Einführung von hydrophoben Gruppen und gegebenenfalls zusätzlich von kationischen Gruppen in den Kohlenhydrat-haltigen porösen Ausgangsmaterialien eine hervorragende Adsorption der ungewünschten fluorierten Verbindungen möglich ist. Durch Wechselwirkung mit den hydrophoben Gruppen einerseits und den gegebenenfalls vorhandenen kationischen Gruppen andererseits wird eine ausreichende Adsorption gewährleistet, die zusätzlich dadurch verstärkt wird, dass das Adsorbens porös ist und nicht etwa nur eine ebene Oberfläche mit hydrophoben oder hydrophob/kationischen Gruppen aufweist. Überraschenderweise hat sich erfindungsgemäß aber gezeigt, dass auch schon bei porösen Materialien mit für Adsorbenzien eher kleinen Oberflächen von zumindest 10 m²/g eine hervorragende Adsorption möglich ist und insbesondere nicht unbedingt eine Oberfläche größer 500 m²/g erforderlich ist, wie sie handelsübliche Adsorbenzien häufig besitzen.

Ferner hat sich gezeigt, dass die porösen Adsorbenzien nicht ausschließlich zur Abtrennung von perfluorierten oder teilfluorierten Tensiden geeignet ist sondern auch für perfluorierte Verbindungen im Allgemeinen (die aufgrund der Wechselwirkung mit den hydrophoben Gruppen gut abgetrennt werden können) als auch von fluorierten anderen organischen Verbindungen (wie beispielsweise organischen Verbindungen mit fluorierten Alkylgruppen oder fluorierten aromatischen Verbindungen, die wiederum mittels der hydrophoben Gruppen leichter adsorbiert werden können). Zu nennen sind insbesondere Fluoralkylalkanole bzw. Fluoralkylalkandiole, Fluortelomere, Fluoroacrylate, Fluoromethacrylate, Fluoralkyldimethylbetaine, Fluoroalkylethylbetaine, perfluorierte und teilfluorierte Fettsäureester, perfluorierte und teilfluorierte Fettalkoholsulfate, perfluorierte und teilfluorierte Fettalkoholpolyglykolethersulfate, nicht-ionische polymere fluorierte Tenside, aliphatische teilfluorierte Polymerester und Perfluoroalkylbetaine.

Die porösen Adsorbenzien eignen sich ferner auch zur Abtrennung anderer unerwünschter Stoffe aus Fluiden, insbesondere anionischer Stoffe, die mit einer gegebenenfalls enthaltenen kationischen Gruppe wechselwirken und dadurch abgetrennt werden können. Zu nennen sind hierzu insbesondere Uranylverbindungen oder auch anorganische oder organische Arsenate und Antimonate.

Erfindungsgemäß wurde auch erkannt, dass für die chemische Modifikation der insbesondere porösen Ausgangsmaterialien auf eine Palette einfach durchführbarer Modifizierungsreaktionen zurückgegriffen werden kann, die dem Fachmann aus der Kohlenhydrat-Chemie im Allgemeinen und der Cellulose-Chemie im Speziellen bekannt sind. Somit kann eine Vielzahl verschiedener Substituenten mittels der Modifizierungsreagenzien chemisch an die Ausgangsmaterialien gebunden werden.

Die porösen Adsorbenzien eignen sich nicht nur zur Reinigung von kontaminierten Wässern sondern auch von anderen Flüssigkeiten, wie organischen Lösungsmitteln (sofern keine chemische Reaktion des Lösungsmittels mit dem eingeführten Substituenten oder dem porösen Adsorbens generell erfolgt und eine Adsorption der unerwünschten Stoffe möglich ist und sofern außerdem keine Auflösung in dem nicht wässrigen Lösungsmittel erfolgt). Ferner sind die porösen Adsorbenzien auch zur Reinigung von Gasen, insbesondere von Luft, geeignet, wobei dann noch nicht einmal eine Wasserunlöslichkeit gegeben sein muss, insbesondere wenn die zu reinigenden Gase nicht feuchtigkeitshaltig sind). Gegebenenfalls können die porösen Adsorbenzien auch zur Anreicherung von Wertstoffen, beispielsweise besonders teurer fluorhaltiger Verbindungen, eingesetzt werden.

Als Ausgangsmaterial werden poröse Kohlenhydrat-haltige Materialien eingesetzt, deren spezifische Oberfläche, ebenso wie die der erfindungsgemäßen porösen Adsorbenzien mittels der BET-Methode bestimmt werden können (gemäß DIN ISO 9277:2003-05). Als poröse Ausgangsmaterialien eignen sich insbesondere biogene Ausgangsmaterialien. Unter biogen ist hierbei zu verstehen, dass keine Materialien chemisch-synthetischer Herkunft verwendet werden, sondern Ausgangsmaterialien, die von Pflanzen, Tieren oder Mikroorganismen (wie Pilzen, Algen und Bakterien) gebildet werden oder aus Materialien, die hieraus hergestellt sind). "Im Wesentlichen" biogen bedeutet dabei, dass zumindest 90 Gew.-%, meist mehr als 95 Gew.-% und häufig mehr als 99 Gew.-% biogenen Ursprungs sind (so ist beispielsweise Kaffeesatz, der lediglich durch Röstung von Kaffeebohnen und nachfolgendes Aufbrühen von Kaffee erhalten wurde, zu 100 Gew.-% biogenen Ursprungs, wenn nicht bei der Herstellung synthetischen Stoffe zugefügt wurden).

Als Ausgangsmaterialien kommen unabhängig hiervon insbesondere solche Materialien in Betracht, die als Kohlenhydrat ein Polysaccharid enthalten oder hieraus bestehen. Bevorzugt wird dieses Polysaccharid wieder ein wasserunlösliches Polysaccharid sein, wobei zu berücksichtigen ist, dass die Hydrophobie durch Einführung der hydrophoben Gruppe erhöht wird und somit auch die Wasserlöslichkeit eines ursprünglich wasserlöslichen Polysaccharids deutlich vermindert werden kann (insbesondere wenn keine kationische Gruppe enthalten ist). Als Polysaccharide sind beispielsweise Cellulose, Stärke, Hemicellulosen, Cellulose-Derivate sowie Chitosane, Chitin und andere kohlenhydrathaltige Polymerverbindungen natürlichen Ursprungs zu nennen. Häufig ist die Cellulose mit Anteilen an Lignin und Polyosen (als Lignocellulose) vergesellschaftet. Die erfindungsgemäß eingesetzten Ausgangsmaterialien können einen Ligninanteil größer 10 Gew.-% aufweisen. So kann etwa in holzartigen Pflanzen der Ligninanteil bis zu 36 Gew.-% betragen. Werden als poröse Ausgangsmaterialien Pflanzen oder aus Pflanzen erhaltene Stoffe verwendet, so kann der Kohlenhydrat-Anteil in Form von Cellulose auch deutlich unter 50 Gew.-% liegen, beispielsweise bei < 45 Gew.-% oder wie in Birkenholz sogar bei 40 Gew.-% oder darunter.

Gemäß einer weiteren Ausführungsform ist das poröse Ausgangsmaterial ein Abfallstoff oder ein biologisches Material mit geringem Marktwert. Bei einem Abfallstoff handelt es sich um ein Material, das insbesondere in großem Maß verfügbar ist und kostengünstig ist, das aber keine hohe Wertschöpfung mehr hat. Insbesondere sind solche Abfallstoffe zu nennen, die von den Betrieben, in denen sie anfallen, bei der Entsorgung Kosten verursachen können (wie beispielsweise Holzabfälle in holzverarbeitenden Betrieben oder auch wie Lebensmittelreste, die keiner weiteren Verwertung mehr zugeführt werden, wie beispielsweise Kaffeesatz).

Gemäß einer weiteren Ausführungsform kann das Ausgangsmaterial daher insbesondere ausgewählt sein aus Kaffeesatz, Holzwerkstoffen, Nussschalen, aus Pflanzen gewonnenen Textilfasern, aus Pflanzen gewonnenen Schäben, Gemischen hiervon und Zerkleinerungsprodukten hiervon. Als Holzwerkstoffe sind insbesondere auch Holzspäne zu nennen sowie Baumrinden und Produkte aus Baumrinden. Ferner sind als Textilfasern Bastfasern und Ähnliches zu nennen. Schließlich seien auch noch Rübenschnitzel, Pilze, Moose und Getreidekörner als pflanzliche Ausgangsmaterialien genannt.

Wie oben ausgeführt, enthält der mit dem Modifizierungsreagenz eingeführte Substituent eine hydrophobe Gruppe. Diese umfasst entweder eine Alkyl-Gruppe, eine Aryl-Gruppe und/oder eine Aralkyl-Gruppe. Die Alkyl-Gruppe enthält eine Octyleneinheit. Mit noch längeren Alkylen- bzw. Alkyl-Gruppen kann die Hydrophobie weiter erhöht werden, was bei bestimmten abzutrennenden fluorierten organischen Verbindungen von Vorteil sein kann. So kann als hydrophobe Gruppe beispielsweise eine Decyleneinheit oder Decyleinheit verwendet werden oder gar eine Dodecyleinheit bzw. Dodecyleneinheit. Als Aryl-Gruppen kommen insbesondere PhenylGruppen oder Phenylen-Gruppen in Betracht, die unsubstituiert sind oder auch substituiert sein können (auch hier insbesondere wiederum mit weiteren reinen Kohlenwasserstoffen in aromatischer oder aliphatischer Form). Als Aralkyl-Gruppen kommen beispielsweise Benzyl-Gruppen in Betracht. Die Aralkylgruppen, beispielsweise die Benzyl- bzw. Benzylen-Gruppen können substituiert oder unsubstituiert sein. Auch Benzylen-Gruppen, bei denen an den aromatischen Ring die ionische Gruppe gebunden ist, sind denkbar. Um die Wechselwirkung mit den zu adsorbierenden fluorhaltigen Verbindungen zu verstärken können die Alkyl-Gruppe, Aryl-Gruppe beziehungsweise Aralkyl-Gruppe ebenfalls teilfluoriert oder perfluoriert sein. Insbesondere sind hierbei teilfluorierte oder perfluorierte Alkyl- oder Alkyleneinheiten in diesen Gruppen zu nennen.

Generell ist eine "kationische Gruppe" im Rahmen dieser Anmeldung so zu verstehen, dass diese Gruppe in einem gegebenen Fluid stets kationisch ist oder alternativ nur unter bestimmten Bedingungen. Insbesondere bei wässrigen Fluiden kann die kationische Gruppe daher bei höheren pH-Werten in der Neutralform und nur bei niedrigeren pH-Werten zumindest teilweise in der protonierten Form vorliegen, wie dies häufig bei primären, sekundären oder tertiären Aminen der Fall ist. Wesentlich ist dann, dass auch in einem gegebenen kontaminierten Fluid die kationische Gruppe zu einem gewissen Anteil in der protonierten Form vorliegt. So weisen primäre, sekundäre und tertiäre niedermolekulare Amine in Wasser einen pk₈ von ca. 4 auf. In pH neutralen Wässern liegt daher im Regelfall überwiegend die protonierte Form vor. Nur in stark alkalischen Wässern kann der protonierte Anteil deutlich niedriger sein. Er sollte aber zumindest 1 %, bevorzugt zumindest 10%, sein. Um zu einer effektiveren Adsorption zu gelangen, kann bei derartigen kationischen Gruppen dann eine Vorbehandlung der kontaminierten Wässer erfolgen, in der der pH-Wert gesenkt wird.

Die in dem mit dem Modifizierungsreagenz eingeführten Substituenten enthaltene kationische Gruppe kann insbesondere ein Ammonium-Ion, meist ein organisch substituiertes Ammonium sein (wobei häufig die hydrophobe Gruppe als "organischer Substituent" des Ammoniums fungiert), sie kann aber auch ein primäres, sekundäres oder tertiäres Amin sein. Gegebenenfalls kann bei primären, sekundären oder tertiären Aminen in einer weiteren Modifizierungsreaktion eine Quaternärisierung erfolgen, so dass zumindest teilweise quaternäre Amingruppen gebildet werden. Hiermit kann bei spezifischen abzutrennenden Stoffen eine maßgeschneiderte Einstellung der Wechselwirkungen Substituent/ abzutrennender Stoff erfolgen und gegebenenfalls auch eine Regenerierung der Trennphase ermöglicht werden. Ferner kann die kationische Gruppe auch ein Phosphonium-Ion sein und hier insbesondere wieder ein organisch substituiertes Phosphonium (bei dem im Regelfall die hydrophobe Gruppe als organischer Substituent dient). Schließlich kann die kationische Gruppe auch in Form eines Metallkomplexes vorliegen, beispielsweise eines Übergangsmetallkomplexes (hierbei kann eine Verknüpfung mit der hydrophoben Gruppe ebenfalls im Metallkomplex vorhanden sein, wobei hierbei eine ganze Reihe von Möglichkeiten besteht; beispielsweise kann die hydrophobe Gruppe Bestandteil eines Liganden des Metallkomplexes sein oder auch der Ligand selbst sein).

Mit derartigen kationischen Gruppen können unerwünschte Verbindungen wie Tenside, aber auch anionische anorganische Gruppen wie Uranyl-Gruppen besonders gut abgetrennt werden.

Gemäß einer Ausführungsform weist das Modifizierungsreagenz die Formel R¹-X, R¹-E-L-X, X-L-R¹-E oder X-R¹-E auf. Hierin stellt R¹ die hydrophobe Gruppe, E die kationische Gruppe, X eine elektrophile oder eine nucleophile Gruppe dar und L einen Linker, mit dem die elektrophile bzw. nucleophile Gruppe an die kationische Gruppe bzw. an die hydrophobe Gruppe gebunden ist. Eine nucleophile Gruppe ist beispielsweise dann sinnvoll, wenn Alkoholgruppen des Kohlenhydrats zuvor umgepolt wurden z.B. zu einem Tosylat.

Die Gruppe X, d.h. die elektrophile oder nucleophile Gruppe, dient hierbei dem Zweck, eine Kopplung von R¹ bzw. R¹-E-L bzw. R¹-E an das Kohlenhydrat-haltige Ausgangsmaterial zu ermöglichen. Insbesondere ist hierbei im Regelfall eine Reaktion mit einer im Kohlenhydrat enthaltenen Alkohol-Gruppe (im Einzelfall auch mit einer Amingruppe oder einer Halogengruppe) denkbar, die entweder als solche in protonierter bzw. deprotonierter Form vorliegt oder in umgepolter Form (etwa durch ein Tosylierungs-Reagenz oder ähnliches). Die Gruppe X ist also häufig eine Abgangsgruppe oder eine reaktive Gruppe, die mit einer am Kohlenhydrat enthaltenen Abgangsgruppe reagiert. Das Modifizierungsreagenz ist dann insbesondere ein Reagenz, das zusammen mit dem Kohlenhydrat eine S_{N}-Reaktion eingeht. Alternativ kann allerdings auch eine radikalische Reaktion zwischen dem Modifizierungsreagenz und dem Kohlenhydrat erfolgen, beispielsweise in Form einer Pfropfcopolymerisation. Schließlich sind auch mehrstufige Reaktionen denkbar, beispielsweise Oxidationen nachfolgende Reduktionen etwa eine Oxidation der Alkohohlgruppen zu Aldehydgruppen und eine nachfolgende reduktive Aminierung.

Mit einem Modifizierungsreagenz der Formel R¹-X wird also direkt die hydrophobe Gruppe eingeführt, mit einem Reagenz der Formel R¹-E-L-X eine hydrophobe Gruppe, die über eine kationische Gruppe und einen Linker an die Gruppe X gebunden ist, mit einem Reagenz der Formel X-L-R¹-E eine kationische Gruppe, die über eine hydrophobe Gruppe und einen Linker an die Gruppe X gebunden ist und X-R¹-E ein Reagenz, bei dem sowohl die kationische Gruppe als auch die Gruppe X an die hydrophobe Gruppe gebunden sind. Ist ein Linker L vorhanden, so kann dieser beispielsweise eine Alkylen-Gruppe sein, etwa Ethylen oder ähnliches; denkbar sind aber auch andere verknüpfende Gruppen - wesentlich ist lediglich, dass eine Kopplung an das Kohlenhydrat erfolgen kann.

Liegt als kationische Gruppe ein organisch substituiertes Ammonium vor, so kann dieses einen, zwei, drei oder vier organische Substituenten aufweisen, ein Amin kann primär, sekundär oder tertiär sein. Häufig ist dabei einer der Substituenten die hydrophobe Gruppe oder enthält die hydrophobe Gruppe. Als weitere organische Substituenten liegen häufig Alkyl-Gruppen vor, beispielsweise Methyl-, Ethyl- oder n- bzw. i-Propyl-Gruppen. Schließlich liegt häufig auch einer der organischen Substituenten in Form der Gruppe L-X vor, wie beispielsweise in einem 3-Chlor-2-hydroxy-propyl-Substituenten oder Epoxy-Substituenten. Ferner wird bei Modifizierungsreagenzien der Formel R¹-E-L-X bei substituierten Ammoniumverbindungen als kationischen Gruppen, das Ammonium mit zwei Alkyl-Gruppen, beispielsweise Methyl-Gruppen, substituiert sein und daneben die Gruppierung L-X sowie die hydrophobe Gruppe R¹ enthalten.

Gemäß einer Ausführungsform wird das Modifizierungsreagenz zur Herstellung des erfindungsgemäßen Adsorbens so ausgewählt, dass zwischen dem Modifizierungsreagenz und dem Kohlenhydrat eine Veresterung oder eine Veretherung von im Kohlenhydrat enthaltenen Alkohol-Gruppen erfolgt. Dabei kann entweder - wie vorstehend erläutert - eine oder mehrere im Kohlenhydrat enthaltene Alkohol-Gruppen in eine Abgangsgruppe umgewandelt werden; alternativ kann auch eine reaktive Gruppe X eingesetzt werden, die dann mit der Alkohol-Gruppe des Kohlenhydrats reagiert. Schließlich kann auch ein Modifizierungsreagenz gewählt werden, das in einer radikalischen Reaktion mit dem Kohlenhydrat reagiert (beispielsweise mit einem Vinylmonomeren wie einem entsprechend derivatisierten Methacrylsäureester oder Vinylether sowie einem Radikalstarter); hierbei kann unter Ringöffnung einzelner Saccharid-Ringe eine Einführung von polymeren Seitenketten erfolgen.

Wird die Modifizierung des Kohlenhydrats als Polymerisationsreaktion, insbesondere eine Pfropfcopolymerisation, durchgeführt, so dient die Polymerisation bzw. das Pfropfen im Regelfall ausschließlich der Einführung der hydrophoben und gegebenenfalls auch der kationischen Gruppe.

Gemäß einer Ausführungsform weisen Ausgangsmaterialien, die ausschließlich aus dem Polysaccharid bestehen oder dieses nur enthalten, bezüglich des Polysaccharids eine massengemittelte Molmasse M_{w} von 10⁴ bis 10⁷ g/mol auf. Dabei kann Molmassenverteilung eng (1 < D ≤ 1.4), moderat (1.4 < D ≤ 2) oder breit (D>2) sein. Die molekulare Analyse erfolgt dabei. mit Hilfe der (organischen) Größenausschlusschromatographie. Häufig wird die Molmasse M_{w} der Polysaccharide 1 x 10⁵ g/mol bis 5 x 10⁷ g/mol betragen. Die untere Grenze für die Molmassen ist insbesondere dann von Relevanz, wenn die Wasserlöslichkeit des Adsorbens eine Rolle spielt. Polysaccharide mit einer Molmasse von zumindest 5 x 10⁴ g/mol sind häufig so schlecht wasserlöslich, dass keine signifikante Auflösung des Adsorbens zu befürchten ist.

Gemäß einer weiteren Ausführungsform können die Ausgangsmaterialien in zerkleinerter Form (beispielsweise als Mahlgut) eingesetzt werden. Hierdurch kann im Regelfall die Oberfläche der Adsorbentien deutlich vergrößert werden. Insbesondere können dabei Partikeldurchmesser vorliegen, wie sie im nachfolgenden Absatz beschrieben sind.

Gemäß einer weiteren Ausführungsform besitzt das Adsorbens einen mittleren Partikeldurchmesser von 0,005 bis 6 mm, insbesondere 0,02 bis 6 mm beispielsweise 0,05 bis 1 mm, beispielsweise 0,1 bis 0,5 mm. Die Partikelgröße wird hierbei mittels Siebverfahren bestimmt. Bei bestimmten Ausgangsmaterialien, beispielsweise Hanfschäben, kann der mittlere Partikeldurchmesser auch größer als 6 mm sein, insbesondere aber größer als 1 mm. Die Partikelform kann beliebig sein, beispielsweise sphärisch oder auch nadelförmig. Auch die Form der Porosität des erfindungsgemäßen Adsorbens ist beliebig wählbar von makro- bis mikroporös, wesentlich ist lediglich, dass das Adsorbens eine gewisse Porosität aufweist und zusätzlich die mit dem Modifizierungsreagenz eingeführten Substituenten vorhanden sind.

Gemäß einer weiteren Ausführungsform kann das Adsorbens so ausgebildet sein, dass es in Kombination mit einem Flockungshilfsmittel eingesetzt werden kann. Grundsätzlich sind hierbei aufgrund der größeren Oberflächen sehr kleine Partikelgrößen von Vorteil, so dass die im vorstehenden Absatz genannten Bereiche nur hinsichtlich der oberen Grenze gültig sind. Insbesondere sind hierfür Adsorbentien mit mittleren Partikelgrößen von 0,005 mm bis zu maximal 1 mm, beispielsweise bis zu maximal 0,5 mm Partikeldurchmesser geeignet. Hierbei wird das Adsorbens in feinverteilter Form in das kontaminierte Fluid gegeben, so dass eine Adsorption erfolgen kann. Anschließend wird das beladene Adsorbens mit einem Flockungshilfsmittel zur Flockung gebracht. Es entstehen auf diese Weise mit Schadstoff beladene, größere Flocken, die leicht sedimentieren bzw. flotieren und/oder durch Filtration abgetrennt werden können. Bei Auswahl geeigneter Flockungshilfsmittel kann die Menge der abgetrennten Organofluorverbindungen zusätzlich gesteigert werden. Als Flockungshilfsmittel sind beispielsweise kationische oder nichtionische, insbesondere aber anionische Polyelektrolyte geeignet. Diese können zum Beispiel auf Polyacrylat, Polyacrylamid, Polyethylenimin und Polyethylenoxid basieren. Daneben können auch nichtionische synthetische und natürliche Flockungshilfsmittel (beispielsweise Stärke und Leim) oder anorganische Polymere wie Polyaluminiumverbindungen, auch in Kombination mit mehrwertigen, niedermolekularen Aluminium- oder Eisensalzen eingesetzt werden.

Die Verwendung der Adsorbentien in Kombination mit einem Flockungshilfsmittel hat den Vorteil, dass sich die die Organofluorverbindungen enthaltenden Flockungsprodukte (beispielsweise PFT-haltige Flockungsprodukte) meist besonders stabil in ihrem Aufbau zeigen; der Schadstoff ist dann in der Flocke dauerhaft immobilisiert und neigt nicht zum Auswaschen.

Gemäß einer weiteren Ausführungsform ist der Substitutionsgrad DS des Kohlenhydrats mit dem Modifizierungsreagenz 0,005 bis 0,5, insbesondere 0,02 bis 0,2, beispielsweise 0,05 bis 0,15. Der Substitutionsgrad bezieht sich hierbei auf die Glucose-Einheiten des Kohlenhydrats, kann also maximal 3 sein, da eine einzelne Anhydroglucose-Einheit bis zu drei freie Hydroxy-Gruppen aufweisen kann. Bei Estern erfolgt die Bestimmung von DS mittels Hydrolyse und anschließende HPLC-MS. Bei anders gebundenen Substituenten, die eine ionische Gruppe tragen, kann DS mittels eines geeigneten Gegenions, insbesondere Cl⁻ potentiometrisch bestimmt werden. In allen verbleibenden Fällen erfolgt die Bestimmung von DS über eine Elementaranalyse.

Mit derartigen Substitutionsgraden kann eine effiziente Adsorption von fluorhaltigen organischen Verbindungen, insbesondere fluorhaltigen Tensiden, erfolgen. Bei niedrigeren Substitutionsgraden erfolgt keine ausreichende Adsorption mehr, aufgrund des zu geringen "Wechselwirkungsvolumens". Bei höheren Substitutionsgraden (die zwar prinzipiell möglich sind) ist keine gravierende Erhöhung der Effizienz mehr zu verzeichnen.

Gemäß einer weiteren Ausführungsform besitzt das Adsorbens eine Porosität (Verhältnis Porenvolumen zu Gesamtvolumen) von 30 bis 95%, insbesondere von 55 bis 80%. Als Porenvolumen wird hierbei das Volumen von Poren mit 2 bis 50 nm Durchmesser bestimmt und zwar gemäß DIN66134. Das Adsorbens kann aber auch Mikro- und/oder Makroporen aufweisen, die das Adsorptionvermögen sowie die prozesstechnische Handhabbarkeit des Materials beeinflussen können.

Ein Verfahren zur Herstellung des porösen Adsorbens weist folgende Schritte auf:
A) Zunächst wird ein Ausgangsmaterial bereitgestellt, das ein Kohlenhydrat enthält oder hieraus besteht, sowie ein Modifizierungsreagenz bereitgestellt, das so ausgewählt ist, dass das Kohlenhydrat mit mindestens einem Substituenten substituiert wird, der eine hydrophobe Gruppe oder eine hydrophobe Gruppe und eine kationische Gruppe enthält. Die hydrophobe Gruppe ist hierbei ausgewählt aus Alkyl-Gruppen, die zumindest eine Octyleneinheit umfassen, aus Aryl-Gruppen und aus Aralkyl-Gruppen. Im Einzelfall kann auch statt einer kationischen Gruppe eine anionische Gruppe eingesetzt werden, dann werden poröse Adsorbenzien erhalten, mit denen eine Abtrennung von kationischen Verbindungen möglich ist.

In einem Schritt B) wird das Ausgangsmaterial dann so mit dem Modifizierungsreagenz behandelt, dass das poröse Adsorbens erhalten wird. Wie vorstehend ausgeführt, steht hierbei eine ganze Palette von verschiedenen chemischen Reaktionsmöglichkeiten zur Verfügung, die bei nucleophilen Substitutionen beginnt und bei radikalischen Reaktionen endet. Mit der chemischen Modifikation der Ausgangsmaterialien werden Adsorbenzien erzeugt, die sich als stationäre Trennphase eignen und mit denen die Abtrennung fluorierter Verbindungen, insbesondere fluorierter Tenside erfolgen kann. Zur Einstellung der geeigneten Hydrophob-Hydrophil-Balance wird das Ausgangsmaterial mit funktionellen Gruppen wie Amino-Gruppen und/oder quaternären Ammonium-Gruppen versehen und ferner für den hydrophoben Anteil mit längeren Alkylketten (z.B. Cocoalkyl, Stearyl oder auch Octyl oder Dodecyl). Funktionalitäten wie Aryl- und Benzyl-Gruppen ermöglichen ebenfalls die Verstärkung von adsorptiven Wechselwirkungen mit nicht ionischen Verbindungen. Die genannten Aryl-, Aralkyl- und Alkyl-Gruppen können dabei auch zumindest teilfluoriert sein.

Schritt B) wird im Allgemeinen als polymeranaloge Reaktion erfolgen, insbesondere als Veretherungs- oder Veresterungsreaktion, kann aber im Einzelfall auch durch einen zweistufigen Prozess realisiert werden. Für Veretherungen kann man insbesondere reaktive Verbindungen wie Epoxide und Alkylchloride verwenden, während für Veresterungen die Umsetzung mit Anhydriden, Aktivestern (z.B. mittels DCC) oder Säurechloriden erreicht werden kann. Die breite Palette von Reaktionsmöglichkeiten in der Polysaccharidchemie ist hier dem Fachmann aus der chemischen Literatur bestens bekannt. Grundsätzlich lassen sich auch durch Verwendung spezifischer Reagenzien, wie beispielsweise sterisch gehinderter Amine die Derivatisierungsreaktion gemäß Schritt B) auch auf die Partikeloberflächen der eingesetzten Kohlenhydrat-haltigen Ausgangsmaterialien beschränken. Als radikalische Modifikationsmöglichkeiten stehen beispielsweise Pfropfung von Allyl- oder Acrylat-Verbindungen zur Auswahl.

Gemäß einer Ausführungsform wird das Verfahren so durchgeführt, dass in Schritt A) entweder ein poröses Ausgangsmaterial bereitgestellt wird oder nach Schritt B) in einem Schritt C) das modifizierte Kohlenhydrat durch eine chemische Reaktion an die Oberfläche eines porösen Stoffs gebunden wird.

Das Adsorbens ist insbesondere geeignet zur Abtrennung fluorierter organischer Verbindungen. Hierbei sind insbesondere fluorierte Kohlenwasserstoffe zu nennen, wie perfluorierte Verbindungen, teilfluorierte Tenside oder perfluorierte Tenside. Grundsätzlich ist hierbei auch möglich, dass eine Desorption der adsorbierten Verbindungen und damit eine Regenerierung der Trennphase sowie die Wiedergewinnung der fluorierten Verbindungen möglich ist, insbesondere wenn es sich hierbei um Wertstoffe handelt, die ansonsten mit aufwändigen chemischen Reaktionen erst wieder hergestellt werden müssten. Eine derartige Desorption kann beispielsweise erfolgen, wenn schwach basische Aminogruppen, an die Anionen von beispielsweise perfluorierten Tensiden angelagert sind. Die Säureanionen der Tenside sind dabei reversibel gebunden und mit einem Zusatz an Base werden bei der Regeneration die freien Aminogruppen wieder zurückgebildet. Abhängig vom Typ der Aminogruppe (primäre, sekundäre oder tertiäre Aminogruppe) und von deren Konstitution ist die Basizität der Austauscher variabel und somit der pH-Wert der optimalen Regeneration einstellbar.

Zusammenfassend ist festzustellen, dass die Trennphasen durch chemische Modifizierung von insbesondere biobasierten porösen Materialien wie Perlcellulosen und Perlchitosanen, Hanfstrukturschäben, Kokosnussschalen, Holzschnipseln. Kaffeesatz oder Ähnlichem erhalten werden. Die Umsetzung kann dann nasschemisch in einem herkömmichen Synthesereaktor aber auch unter anderen Bedingungen, beispielsweise im Kneter oder in überkritischem Kohlendioxid als Reaktionsmedium erfolgen. Polymere Kohlenhydrate wie Polysaccharide sind eine gut geeignete materialtechnische Grundlage für die erfindungsgemäßen Adsorbenzien, da sie eine Reihe von Vorteilen bieten, die andere Materialien nicht aufweisen. Dazu gehören ihre Verfügbarkeit in großem Umfang (insbesondere bei Naturprodukten wie Hanfstrukturschäben oder bei Abfallstoffen wie Kaffeesatz und Holzschnitzel), die Hydrophilie, die meist vorliegende gute mechanische Festigkeit und die chemische Stabilität. Schließlich sind sie vielfältig funktionalisierbar, da eine ganze Palette chemischer Reaktionen zur Verfügung steht, so dass die Synthese der erfindungsgemäßen porösen Adsorbenzien unproblematisch ist. Dasselbe gilt auch für deren Entsorgung, die entweder durch Hydrolyse oder thermisch stattfinden kann. Beispielsweise kann bei Kohlenhydrat-haltigen Ausgangsmaterialien, die als Abfallprodukte nur einer thermischen Verwertung zugeführt worden wären, zunächst eine Nutzung als Adsorbens erfolgen (Kaskadennutzung) und erst nachfolgend die thermische Verwertung, was die Wertschöpfung innerhalb der Verwertungskette solcher Kohlenhydratprodukte deutlich erhöht. Darüber hinaus ist auch der thermische Abbau von fluortensidischen Verbindungen eine geeignete Entsorgungsmethode, die großtechnisch auch schon bei kontaminierten Aktivkohlen realisiert wird.

Die Adsorbentien eignen sich somit hervorragend zur Abtrennung fluorierter organischer Verbindungen, insbesondere fluorierter Kohlenwasserstoffe, aus damit kontaminierten Fluiden. Insbesondere sind hierbei perfluorierte Verbindungen und fluorierte Tenside zu nennen. Die Adsorbentien sind zudem sowohl als Filtermaterial als auch als Bindemittel geeignet. Unter einem Bindemittel wird hierbei ein Material verstanden, das auf exponierte, in Wasser oder einem anderen Fluid gelöste Substanzen (hier Schadstoffe) aufgebracht wurde, und das in der Lage ist, diese aufzunehmen. Weitere vorteilhafte Ausführungsbeispiele und Weiterbildungen der Erfindung ergeben sich im Folgenden - ohne Einschränkung der Allgemeinheit - aus den Beispielen.

### Beispiel 1 - Oxidation und reduktive Aminierung von Perlcellulose

Hierbei wird gemäß nachfolgendem Schema zunächst mit Natriumperiodat die vicinale Dioleinheit im Anhydroglukosering gespalten, um dann in einem zweiten Schritt die entstandenen Aldehydfunktionen zu Aminieren:

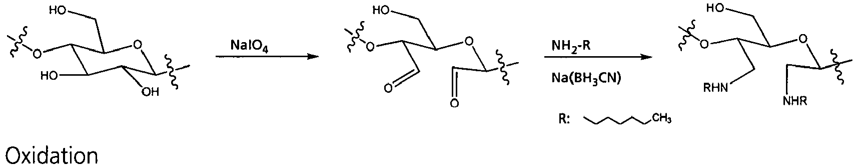

25 g Cellulosematerial werden in 150 mL einer 0,25 M Natriumperiodatlösung suspendiert und 2 h bei 40 °C gerührt. Zum Beenden der Reaktion werden 25 mL Ethylenglykol hinzugefügt und eine weitere Stunde bei 40 °C gerührt. Nach dem Abkühlen wird das Produkt abzentrifugiert, mit Ethanol mehrfach gewaschen und bei 40 °C im Vakuumtrockenschrank getrocknet.

### Aminierung

6 g des oxidierten Cellulosematerials werden in 100 mL einer Phosphatpufferlösung nach Sörensen (pH 7) 1 h gerührt. Nach Zugabe von 6,9 g Dodecylamin bzw. (zum Vergleich) 3,7 g Hexylamin und 7,0 g Natriumcyanoborhydrid wird für 24 h weitergerührt. Mit verdünnter Salzsäure wird pH ∼ 7,5 eingestellt und das Produkt mit einem Ethanol-/Wasser-Gemisch gewaschen. Die Trocknung erfolgt bei 40 °C im Vakuumtrockenschrank.

### Beispiel 2 - Ce(IV)-redoxinitiierte Pfropfcopolymerisation von Methacryloyloxyethyldimethylbenzylammoniumchlorid und Acrylamid auf Perlcellulose

20 g Perlcellulose (gequollen, d.h. ∼7 g Trockensubstanz an Perloza MT50 der Fa. lontosorb, Usti nad Labem; Tschechien) werden zunächst zur Abtrennung des Stabilisators Natriumazid in 100 ml vollentsalztem Wasser dispergiert, nach 1 Stunde abfiltriert und mehrmals mit VE- Wasser gewaschen.

In 56 mL vollentsalztem Wasser werden 7,2 g Trockensubstanz des Cellulosesubstrates gegeben. Dieser Mischung werden 34 g einer 75 %igen wässrigen Lösung an Methacryloyloxyethyldimethylbenzylammoniumchlorid und 0,71 g Acrylamid zugesetzt und in einen temperierbaren Doppelmantelreaktor überführt. Nachdem die Reaktionsmischung etwa 1 h mit N₂ bei 25°C gespült wurde, werden 10 mL einer sauren 0,2 mol/L CerammoniumnitratLösung zugegeben. Für die Initiatorlösung werden 1,096 g Cerammoniumnitrat in einem 10 mL Maßkolben eingewogen und dieser mit 0,1 M HNO₃ aufgefüllt. Die Reaktionslösung wird weitere 3 Stunden bei 25°C gerührt, nachfolgend mit 1 n NaOH neutralisiert und gegen Wasser dialysiert (Dialyseschlauch aus reg. Cellulose, Cut-Off: 6×103 g/mol, Leitfähigkeitskontrolle). Abschließend wird der im aufgereinigten Retentat enthaltene Feststoffanteil über einen Büchnertrichter abgesaugt und mehrfach mit Wasser gewaschen. Das so erhaltene Pfropfprodukt der Perlcellulose besitzt einen synth. Massenanteil von 27 %. Des Weiteren werden die wässrige Phase und die Waschwässer der Filtration vereinigt und gefriergetrocknet. Die gelchromatographische Analyse (0,2 mol/L Na₂SO₄ + 1 % w/w Essigsäure, Säulen:TSK-Gel PWH Guard/6000/5000/3000/Hemabio 40; 1 mL/min) des gefriergetrockneten Produktes belegt, dass in der wässrigen Ce(IV)-Pfropfreaktion noch wesentliche Anteile - die Pfropfeffizienz ist etwa 50 % - an freiem, nicht gepfropften Copolymer mit einer massengemittelten Molmasse von 34 × 103 g/mol (MALLS-Detektion Dawn DSP, Fa. Wyatt) entstehen.

### Beispiel 3 - Umsetzung von cellulosehaltigen Materialien mit 3-Chloro-2-hydroxy-propyldimethyldocecylammoniumchlorid (CHPDDAC)

In einem Dreihalskolben werden 76 g Wasser, 43 g an 3-Chloro-2-hydroxy-propyl-dimethyldocecylammoniumchlorid-Lösung (40 % w/w) und die stöchiometrische Menge NaOH unter Rühren vorgelegt. Anschließend werden 8,1 g Trockensubstanz des Cellulosesubstrates (Perlcellulose, Hanfschäben, Holzspäne, Kaffeesatz) zugegeben und bei Raumtemperatur innerhalb von 30 Minuten die erforderliche Menge katalytische NaOH (4 g in 76 g Wasser) langsam unter starkem Rühren zugetropft. Nach beendeter Zugabe wird das Reaktionsgemisch auf 40 °C aufgeheizt und 24 h bei dieser Temperatur gerührt. Danach wird mit verdünnter Salzsäure ein pH von 5-7 eingestellt, abfiltriert, der so erhaltene Filterkuchen mit Wasser bzw. Ethanol gewaschen und anschließend an der Luft getrocknet.

### Beispiel 4 - Umsetzung von cellulosehaltigen Materialien mit 3-Chloro-2-hydroxy-propyldimethylstearylammoniumchlorid-Lösung

Die Umsetzung erfolgt wie in Beispiel 3. Allerdings wird das Reaktionsgemisch 22 h bei 40 °C gerührt. Nach dem Abkühlen des Reaktionsgemisches wird mit Wasser gewaschen, bis der pH-Wert bei ca. 8 - 9 liegt.

### Beispiel 5 - Adsorptionsuntersuchungen mit Perfluoroctansulfonat (PFOS) bzw. mit Perfluorbutansulfonat (PFBS)

Als Referenz für die erfindungsgemäßen Adsorptionsmittel wurden zunächst drei kommerziell erhältliche Aktivkohlen aus dem unteren Preissegment getestet. Hierzu wurden variable Aktivkohlenmengen jeweils mit wässrigen Lösungen an 0,2 g/l der Sulfonate PFOS oder PFBS versetzt, 48 h geschüttelt und anschließend die adsorbierte Analytmenge bzw. die Wiederfindung des Analyten in Lösung mit Hilfe der HPLC-MS (DIN 38407-42:2010-05) ermittelt. Die Aktivkohlen zeigen gegenüber dem längerkettigen PFOS ein deutlich höheres Adsorptionsvermögen als für den hydrophileren Analyten PFBS. Bei einem Massenverhältnis von Aktivkohle zu PFOS von 25:1 wird PFOS von allen Aktivkohlen nahezu vollständig adsorbiert, demzufolge ist eine Differenzierung der Aktivkohlen nicht mehr möglich. Setzt man gleiche Versuchsbedingungen für den Analyten PFBS an, so sind Unterschiede im Adsorptionsvermögen der einzelnen Aktivkohlen messbar. In der folgenden Tabelle sind exemplarisch die Wiederfindungen an PFBS bzw. PFOS bei Verwendung der unterschiedlichen Aktivkohlen im Verhältnis 25:1 bzw. 5:1 dokumentiert.

**Tabelle 1: Wiederfindungsraten (W) aus Adsorptionsuntersuchungen mit verschiedenen Aktivkohlen (Ak) als Adsorbenzien und einer 0,2 g/L Analytlösung an PFOS bzw. PFBS. Die Wiederfindungsraten wurden mittels HPLC-MS bestimmt.**

| Nr. | Aktivkohle (Ak) | Spez. Oberfläche [m²/g] | W (PFOS) Ak:PFOS = 5:1 [%] | W (PFBS) Ak:PFBS = 5:1 [%] | W (PFBS) Ak:PFBS = 25:1 [%] |
|---|---|---|---|---|---|
| 1 | Chemviron C 201 | 775 | 45 | 100 | 21 |
| 2 | Silcarbon K835 | 1150 | 51 | 100 | 26 |
| 3 | Aqua C830 | 1100 | 52 | 100 | 18 |

Im Folgenden wurde das Adsorptionsvermögen unterschiedlicher (poröser) Biomaterialien bzw. das ihrer Derivatisierungsprodukte in gleicher Weise wie für die vorstehenden Aktivkohlen quantifiziert. Dabei stehen die Adsorptionsuntersuchungen mit der kurzkettigen Perfluorverbindung PFBS im Vordergrund, da die getesteten Aktivkohlen für derartige PFT-Verbindungen ein deutlich schlechteres Adsorptionsvermögen aufweisen und somit hierfür ein Bedarf an neuen, spezifischen Adsorbenzien abzuleiten ist.

**Tabelle 2: Wiederfindungsraten (W) aus Adsorptionsuntersuchungen mit verschiedenen BioAdsorbenzien (BioAd) bzw. ihren Derivatisierungsprodukten und einer 0,2 g/l Analytlösung an PFBS. Die Wiederfindungsraten in Lösung wurden mittels HPLC-MS bestimmt.**

| Nr. | Bioadsorbens (BioAd) | Chemische Modifizierung | Spez. Oberfläche [m²/g] | W (PFBS) BioAd:PFBS = 25:1 [%] |
|---|---|---|---|---|
| 4 | Perlcellulose | Keine | 73 | 88 |
| 5 | Hanfschäben | Keine | 215 | 100 |
| 6 | Fichtenholzspäne | Keine | 72 | 55 |
| 7 | Kaffeesatz | Keine | 26 | 100 |
| 8 | Perlcellulose | gemäß Beispiel 2 | 26 | 84 |
| 9 | Perlcellulose | gemäß Beispiel 1 mit Hexylamin | 42 | 48 |
| 10 | Perlcellulose | gemäß Beispiel 1 mit Dodecylamin | 30 | 32 |
| 11 | Kaffeesatz | gemäß Beispiel 1 mit Hexylamin | 78 | 97 |
| 12 | Kaffeesatz | gemäß Beispiel 1 mit Dodecylamin | 58 | 82 |
| 13 | Perlcellulose | gemäß Beispiel 3 | 57 | 11 |
| 14 | Hanfschäben | gemäß Beispiel 3 | 75 | < 0,1 |
| 15 | Fichtenholzspäne | gemäß Beispiel 3 | 80 | 0,1 |
| 16 | Perlcellulose | gemäß Beispiel 4 | 60 | 2,6 |

Es zeigt sich, dass insbesondere die gemäß Beispiel 3 und 4 modifizierten Materialien hervorragende Adsorptionseigenschaften aufweisen. Ferner ist zu beobachten, dass die spezifische Oberfläche durch die Modifikationsreaktion meistens deutlich reduziert wird. Schließlich ist auch noch zu beobachten, dass durch den Einsatz längerkettigerer Verbindungen, insbesondere von Dodecyl-Verbindungen bessere Ergebnisse erzielt werden als mit Hexyl-Verbindungen, die sich teilweise kaum von unmodifiziertem Ausgangsmaterial unterscheiden.

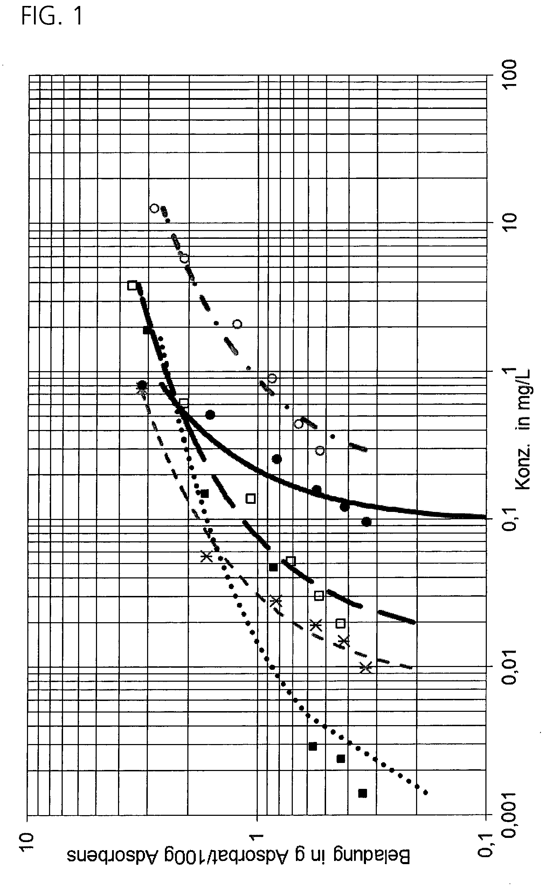

Figur 1 zeigt die Ergebnisse, die bei der Bestimmung der Adsorptionsisothermen erhalten wurden. Die in Tabelle 2 angeführten Adsorbentien Nr. 14 (in Fig. 1: ausgefüllte Quadrate / gepunktete Linie) und Nr. 15 (Sterne / gestrichelte Linie mit kurzen Strichen) werden mit den zwei Aktivkohlen Chemviron C830 (Kreise / Strichpunkt-Linie) Chemviron C301 (nicht ausgefüllte Quadrate / gestrichelte Linie mit langen Strichen) und dem handelsüblichen lonentauschermaterial Lewatit DW 630, Fa. Lanxess (ausgefüllte Kreise / durchgezogene Linie) verglichen. Die Adsorptionsuntersuchungen werden wieder mit Wasser, das mit PFBS verunreinigt ist durchgeführt. Figur 1 zeigt deutlich die besondere Eignung der beiden Adsorbentien Nr. 14 und Nr. 15 gerade auch für niedrige Konzentrationen an PFBS. Im Bereich von ca. 0,002 bis 0,01 mg/L zeigen die Vergleichsadsorbentien keine Tendenz, die Schadstoffe aus Wasser zu entfernen, wohingegen bei den erfindungsgemäß modifizierten Substanzen bessere Ergebnisse hinsichtlich der erreichbaren PFBS-Restkonzentration (ca. um 10 µg/L geringer) feststellbar sind. Die Adsorbentien Nr. 14 und Nr. 15 weisen auch höhere Beladungskapazitäten (>166 mg/g) als die auf dem Markt erhältlichen Adsorbenzien (<107 mg/g) auf.

### Beispiel 6 - Flockungsversuch

Es werden 4,2 g gequollene Perlcellulose (Perloza MT50 mit einem mittleren Partikeldurchmesser von 50 µm) bzw. modifizierte Perlcellulose (Nr. 13 aus Tabelle 2) in 300 mL Leitungswasser gegeben. Mittels Ultra Turrax wird die Suspension für ca. 15 Sek. auf geringer Stufe dispergiert. 200 mL Dispersion werden in den Flockungszylinder gefüllt (bis zur unteren Markierung des Zylinders), anschließend werden 10 mL einer 0,2 g/L PFBS-Stammlösung zupipettiert. Der Flockungszylinder wird nun mit der Dispersion aufgefüllt bis insgesamt 250 mL Flüssigkeit enthalten sind (bis zur oberen Markierung des Zylinders). Es folgt die Zugabe des Flockungshilfsmittels. Dabei werden zunächst 2,5 mL einer 20 %-igen Al₂(SO₄)₃-Lösung zugegeben (primärer Flockungsschritt) und mit einem Z-Rührer (Radialrührer mit mechanisch geringem Energieeintrag) bei einer Drehzahl von ca. 320 U/min gerührt und anschließend 5 mL einer wässrigen Lösung von 0,02 Gew.-% Praestol A 3040 (Fa. Ashland, Krefeld) innerhalb von 15 s hinzupipettiert (sekundärer Flockungsschritt). Nach weiterem Rühren (5 Sekunden; mit Zugabe insgesamt 20 s) wird der Rührer ausgeschaltet. Sofort nach Beendigung des Rührens wird die Hauptflockenfront beobachtet und via Stoppuhr die Zeit gemessen, welche die Flockenfront benötigt, um von der oberen bis zu unteren Markierung zu sedimentieren. Im Falle der reinen Perlcellulose konnte keine fest/flüssig Phasentrennung beobachtet werden, während im Fall der Dispersion der modifizierten Perlcellulose eine vollständige Sedimentation nach 5 Minuten beobachtet wurde. (Resttrübe bei 550 nm: 36 %) Der Feststoff beider Lösungen ließ sich mit einem Faltenfilter (Macherey-Nagel MN 1670) gut abfiltrieren. Beide Proben wurden mit einem Spritzenvorsatzfilter (Fa. Roth, Celluloseacetat, 45 µm) filtriert und anschließend photometrisch der verbleibende PFBS-Gehalt in der Lösung (Wiederfindungsrate) bestimmt. Blindversuche zeigen, dass sowohl der Faltenfilter als auch der Spritzenvorsatzfilter kein PFBS adsorbieren. Die Wiederfindungsrate an PFBS der unbehandelten Perlcellulose lag bei 44 %, die der modifizierten bei 2%. Um die Stabilität des Sediments zu prüfen, wurde der Feststoff aus dem Faltenfilter mit Wasser aufgeschlämmt und anschließend 20 Minuten bei 20 000 Umdrehungen zentrifugiert. Die flüssige Phase wurde abdekantiert und wiederum durch den Spritzenvorsatzfilter filtriert und nachfolgend photometrisch vermessen. Es wurde kein PFBS nachgewiesen.

## Patentansprüche

1. Verwendung eines porösen Adsorbens zur Abtrennung fluorierter organischer Verbindungen, insbesondere fluorierter Kohlenwasserstoffe, aus damit kontaminierten Fluiden, insbesondere zur Abtrennung von perfluorierten Verbindungen oder fluorierten Tensiden,
wobei das Adsorbens einen Substituenten mit einer hydrophoben Gruppe oder mit einer hydrophoben Gruppe und einer kationischen Gruppe enthält und eine mittels der BET-Methode bestimmten spezifische Oberfläche von mindestens 10¹ m²/g, insbesondere 10¹ bis 10³ m²/g aufweist, und erhältlich ist durch ein Verfahren mit folgenden Schritten:
A) Bereitstellung eines porösen Ausgangsmaterials, das ein Kohlenhydrat enthält oder hieraus besteht, und eines Modifizierungsreagenzes, wobei das Modifizierungsreagenz so ausgewählt ist, dass das Kohlenhydrat durch chemische Reaktion mit dem Modifizierungsreagenz zumindest teilweise mit dem Substituenten substituiert wird, der die hydrophobe Gruppe oder die hydrophobe Gruppe und die kationische Gruppe enthält, und wobei die hydrophobe Gruppe ausgewählt ist aus Alkylgruppen, die zumindest eine Octyleneinheit, also eine Einheit der Formel-C₈H₁₆-, umfassen, aus Aryl-Gruppen und aus Aralkyl-Gruppen;
B) Behandlung des Ausgangsmaterials mit dem Modifizierungsreagenz, sodass das poröse Adsorbens erhalten wird.

2. Verwendung nach dem vorhergehenden Anspruch, wobei das poröse Ausgangsmaterial biogen ist.

3. Verwendung nach einem der vorhergehenden Ansprüche, wobei das poröse Ausgangsmaterial als Kohlenhydrat ein Polysaccharid, insbesondere Cellulose, enthält oder hieraus besteht.

4. Verwendung nach einem der vorhergehenden Ansprüche, wobei das poröse Ausgangsmaterial als Abfallstoff erhältlich ist.

5. Verwendung nach einem der vorhergehenden Ansprüche, wobei das poröse Ausgangsmaterial ausgewählt ist aus Kaffeesatz, einem Holzwerkstoff, einer Nussschale, einer aus Pflanzen gewonnenen Textilfaser, einer aus Pflanzen gewonnenen Schäbe und Gemischen hiervon.

6. Verwendung nach einem der vorhergehenden Ansprüche, wobei die kationische Gruppe ein im kontaminierten Fluid zumindest teilweise protoniert vorliegendes Amin, ein organisch substituiertes Ammonium, ein organisch substituiertes Phosphonium oder einen Metallkomplex umfasst.

7. Verwendung nach einem der vorhergehenden Ansprüche, wobei
das Modifizierungsreagenz die Formel R¹-X, R¹-E-L-X, X-L-R¹-E oder X-R¹-E besitzt, worin
R¹ die hydrophobe Gruppe,
E die kationische Gruppe,
X bezüglich des zu modifizierenden Kohlenhydrats eine elektrophile Gruppe oder eine nucleophile Gruppe ist und
L ein Linker ist, mit dem die elektrophile oder nucleophile Gruppe an die kationische Gruppe beziehungsweise die hydrophobe gebunden ist.

8. Verwendung nach einem der vorhergehenden Ansprüche, wobei mit dem Modifizierungsreagenz eine Veresterung oder eine Veretherung von Alkoholgruppen des Kohlenhydrats oder eine Pfropfcopolymerisation mit dem Kohlenhydrat erfolgt.

9. Verwendung nach dem vorhergehenden Anspruch, wobei das Polysaccharid eine mittels Größenausschlusschromatographie ermittelte massengemittelte Molmasse M_{w} von 10⁴ bis 10⁷ g/mol besitzt.

10. Verwendung nach einem der vorhergehenden Ansprüche, wobei das poröse Adsorbens in Form von Partikeln vorliegt und die Adsorbenspartikel einen mittels Siebverfahren ermittelten mittleren Durchmesser von 0,02 bis 6 mm, insbesondere von 0,1 bis 1 mm, aufweisen.

11. Verwendung nach einem der vorhergehenden Ansprüche, wobei
der Substitutionsgrad DS des Kohlenhydrats mit dem Modifizierungsreagenz 0,005 bis 0,5, insbesondere 0,02 bis 0,2, beispielsweise 0,05 bis 0,15 beträgt.

12. Verwendung nach einem der vorhergehenden Ansprüche, wobei
das Adsorbens eine Verhältnis von Porenvolumen zu Gesamtvolumen von 30 bis 95 %, insbesondere von 55 bis 85 % aufweist, wobei als Porenvolumen das mittels DIN66134 ermittelte Volumen der Poren mit 2 bis 50 nm Durchmesser zugrunde gelegt wird.

13. Verwendung nach einem der vorhergehenden Ansprüche, wobei das Adsorbens in Kombination mit einem Flockungshilfsmittel eingesetzt wird.

## Claims

1. Use of a porous adsorbent for removing fluorinated organic compounds, especially fluorinated hydrocarbons, from fluids contaminated therewith, especially for removing perfluorinated compounds or fluorinated surfactants,
wherein the adsorbent contains a substituent having a hydrophobic group or having a hydrophobic group and a cationic group and has a specific surface area, as determined via the BET method, of at least 10¹ m²/g, especially 10¹ to 10³ m²/g, and is available by a process comprising the steps of:
A) providing a porous starting material which contains or consists of a carbohydrate, and a modifying reagent, wherein the modifying reagent is selected such that the carbohydrate is by reaction with the modifying reagent at least partly substituted with the substituent which contains the hydrophobic group or the hydrophobic group and the cationic group, and wherein the hydrophobic group is selected from alkyl groups comprising at least an octylene unit, i.e. a unit of the formula -C₈H₁₆-, from aryl groups and from aralkyl groups;
B) treating the starting material with the modifying reagent to obtain the porous adsorbent.

2. Use according to the preceding claim, wherein the porous starting material is biogenic.

3. Use according to either preceding claim, wherein the porous starting material contains or consists of a polysaccharide, especially cellulose, as carbohydrate.

4. Use according to any preceding claim, wherein the porous starting material is obtainable as a waste material.

5. Use according to any preceding claim, wherein the porous starting material is selected from coffee grinds, a wood-base material, a nut shell, a textile fibre derived from plants, a shive derived from plants, and mixtures thereof.

6. Use according to any preceding claim, wherein the cationic group comprises an amine present in the contaminated fluid in an at least partly protonated form, an organically substituted ammonium, an organically substituted phosphonium or a metal complex.

7. Use according to any preceding claim, wherein the modifying reagent has the formula R¹-X, R¹-E-L-X, X-L-R¹-E or X-R¹-E, where
R¹ is the hydrophobic group,
E is the cationic group,
X is an electrophilic group or a nucleophilic group with respect to the carbohydrate to be modified, and
L is a linker linking the electrophilic or nucleophilic group to the cationic group or, respectively, the hydrophobic one.

8. Use according to any preceding claim, wherein the modifying reagent effects an esterification or etherification of alcohol groups of the carbohydrate or a graft copolymerization with the carbohydrate.

9. Use according to any preceding claim, wherein the polysaccharide has a 10⁴ to 10⁷ g/mol M_{w} mass-averaged molar mass determined via size exclusion chromatography.

10. Use according to any preceding claim, wherein the porous adsorbent is in the form of particles and the adsorbent particles have a 0.02 to 6 mm, especially 0.1 to 1 mm, average diameter determined via sieving.

11. Use according to any preceding claim, wherein the DS degree of substitution of the carbohydrate with the modifying reagent is in the range from 0.005 to 0.5, especially from 0.02 to 0.2, for example from 0.05 to 0.15.

12. Use according to any preceding claim, wherein the adsorbent has a 30 to 95%, especially 55 to 85%, ratio of pore volume to overall volume, wherein the pore volume used is the volume determined via DIN66134 for pores from 2 to 50 nm in diameter.

13. Use according to any preceding claim, wherein the adsorbent is employed in combination with a flocculation assistant.

## Revendications

1. Utilisation d'un adsorbant poreux pour la séparation de composés organiques fluorés, notamment d'hydrocarbures fluorés, à partir de fluides contaminés avec ceux-ci, notamment pour la séparation de composés perfluorés ou de tensioactifs fluorés,
dans laquelle l'adsorbant contient un substituant comprenant un groupe hydrophobe ou comprenant un groupe hydrophobe et un groupe cationique, et présente une surface spécifique déterminée par la méthode BET d'au moins 10¹ m²/g, notamment de 10¹ à 10³ m²/g, et peut être obtenu par un procédé comprenant les étapes suivantes :
A) la préparation d'un matériau de départ poreux, qui contient un glucide ou en est constitué, et d'un réactif de modification, le réactif de modification étant choisi de sorte que, par réaction chimique avec le réactif modificateur, le glucide soit au moins partiellement substitué avec le substituant qui contient le groupe hydrophobe ou le groupe hydrophobe et le groupe cationique, le groupe hydrophobe étant choisi parmi les groupes alkyle qui comprennent au moins une unité octylène, c'est-à-dire une unité de formule -C₈H₁₆-, parmi les groupes aryle et parmi les groupes aralkyle ;
B) le traitement du matériau de départ avec le réactif de modification, de manière à obtenir l'adsorbant poreux.

2. Utilisation selon la revendication précédente, dans laquelle le matériau de départ poreux est biogène.

3. Utilisation selon l'une quelconque des revendications précédentes, dans laquelle le matériau de départ poreux contient en tant que glucide un polysaccharide, notamment de la cellulose, ou en est constitué.

4. Utilisation selon l'une quelconque des revendications précédentes, dans laquelle le matériau de départ poreux peut être obtenu en tant que déchet.

5. Utilisation selon l'une quelconque des revendications précédentes, dans laquelle le matériau de départ poreux est choisi parmi le marc de café, un matériau à base de bois, une coque de noix, une fibre textile obtenue à partir de plantes, une chèvenotte obtenue à partir de plantes et leurs mélanges.

6. Utilisation selon l'une quelconque des revendications précédentes, dans laquelle le groupe cationique comprend une amine qui se présente au moins partiellement sous forme protonée dans le fluide contaminé, un ammonium substitué organiquement, un phosphonium substitué organiquement ou un complexe métallique.

7. Utilisation selon l'une quelconque des revendications précédentes, dans laquelle le réactif de modification présente la formule R¹-X, R¹-E-L-X, X-L-R¹-E ou X-R¹-E,
R¹ étant le groupe hydrophobe,
E étant le groupe cationique,
X étant un groupe électrophile ou un groupe nucléophile par rapport au glucide à modifier et
L étant un agent de liaison, avec lequel le groupe électrophile ou nucléophile est relié au groupe cationique ou au groupe hydrophobe.

8. Utilisation selon l'une quelconque des revendications précédentes, dans laquelle une estérification ou une éthérification de groupes alcool du glucide ou une copolymérisation-greffage avec le glucide a lieu avec le réactif de modification.

9. Utilisation selon la revendication précédente, dans laquelle le polysaccharide présente une masse molaire M_{w} moyenne en masse déterminée par chromatographie d'exclusion stérique de 10⁴ à 10⁷ g/mol.

10. Utilisation selon l'une quelconque des revendications précédentes, dans laquelle l'adsorbant poreux se présente sous la forme de particules et les particules d'adsorbant présentent un diamètre moyen déterminé par un procédé de tamisage de 0,02 à 6 mm, notamment de 0,1 à 1 mm.

11. Utilisation selon l'une quelconque des revendications précédentes, dans laquelle le degré de substitution DS du glucide avec le réactif de modification est de 0,005 à 0,5, notamment de 0,02 à 0,2, par exemple de 0,05 à 0,15.

12. Utilisation selon l'une quelconque des revendications précédentes, dans laquelle l'adsorbant présente un rapport entre le volume poreux et le volume total de 30 à 95 %, notamment de 55 à 85 %, le volume des pores de 2 à 50 nm de diamètre déterminé selon DIN 66134 étant utilisé en tant que volume poreux.

13. Utilisation selon l'une quelconque des revendications précédentes, dans laquelle l'adsorbant est utilisé en combinaison avec un adjuvant de floculation.
